# EUROPEAN PATENT APPLICATION

(11) **EP 4 641 214 A1**
(43) Date of publication of application: **29.10.2025**
(21) Application number: 23906649.1
(22) Date of filing: 30.11.2023
(51) Int. Cl.: G01N 35/10

(54) **AUTOMATED ANALYSIS DEVICE**

(30) Priority: 22.12.2022 JP 2022206011
(71) Applicant: HITACHI HIGH-TECH CORPORATION, Tokyo 105-6409 (JP)
(72) Inventor: YASUE, Takuma, Tokyo 105-6409 (JP)
(74) Representative: Strehl & Partner mbB
(86) International application number: PCT/JP2023/042996
(87) International publication number: WO 2024/135281

(57) **Abstract**

An automatic analyzer includes a dispensing nozzle 30 having an opening portion OP1, a tip 40 having an opening portion OP2 and an opening portion OP3, and a control portion controlling the aspiration operation and the discharging operation of the dispensing nozzle 30. When a second liquid LQ2 is discharged from the inside of the dispensing nozzle 30 to the inside of the tip 40 through the opening portion OP1, and the liquid LQ2 and a remaining liquid LQ1a are discharged from the inside of the tip 40 to the outside of the tip 40 through the opening portion OP3, the second liquid LQ2 is discharged so as to impinge upon an inner wall of the tip 40 by the time when the second liquid LQ2 reaches the opening portion OP3 from the opening portion OP1.

## Description

### Technical Field

This invention relates to an automatic analyzer.

### Background Art

An automatic analyzer including a dispensing nozzle for aspirating and discharging a liquid such as a sample such as blood, or a reagent has been known. The automatic analyzer performs an operation of discharging the aspirated liquid into a predetermined vessel and then newly aspirating a different liquid. In this case, to ensure the accuracy of the analysis, it is important to prevent the most recently aspirated liquid from mixing into the dispensing nozzle. For that, means to mount a disposable tip (hereinafter, abbreviated as a tip) at the end of the dispensing nozzle can be typically taken.

Here, disclosed is a liquid aspiration tube in which even when the liquid remaining in the tip scatters at the time of removing the tip, the liquid can be prevented from adhering into an aspiration hole (see Patent Literature 1).

### Citation List

### Patent Literature

Patent Literature 1: Japanese Unexamined Patent Application Publication No. 2008-249659

### Summary of Invention

### Technical Problem

According to Patent Literature 1, even when the remaining liquid scatters at the time of removing the tip, the remaining liquid can be suppressed from adhering to the dispensing nozzle. However, a solution for the scattering caused when the liquid discharged from the dispensing nozzle comes into contact with the remaining liquid in the tip has not been mentioned.

A main object of this application is to provide an automatic analyzer in which a different liquid can be discharged from a dispensing nozzle to the inside of a tip so as to prevent an opening portion of the dispensing nozzle from directly coming into contact with a liquid remaining in the inside of the tip at the time of removing the tip. With this, the accuracy of the analysis using the automatic analyzer is suppressed from being lowered.

Objects, novel features other than the above will be apparent from the description and appended drawings of the present description.

### Solution to Problem

An automatic analyzer of one embodiment includes: a nozzle having a first opening portion for aspirating and discharging a liquid; a tip having a second opening portion for mounting the tip to the nozzle so as to surround the first opening portion, and a third opening portion for aspirating and discharging the liquid; and a control portion controlling an aspiration operation and a discharging operation by the nozzle. When in a state where the tip is mounted to the nozzle, after a first liquid is aspirated from an outside of the tip to an inside of the tip through the third opening portion and the first liquid is discharged from the inside of the tip to the outside of the tip through the third opening portion, a second liquid is discharged from an inside of the nozzle to the inside of the tip through the first opening portion, and the second liquid and the first liquid remaining in the inside of the tip are discharged from the inside of the tip to the outside of the tip through the third opening portion, the second liquid is discharged so as to impinge upon an inner wall of the tip by the time when the second liquid reaches the third opening portion from the first opening portion.

### Advantageous Effects of Invention

According to the embodiment, it is possible to suppress the accuracy of the analysis using the automatic analyzer from being lowered.

### Brief Description of Drawings

Fig. 1 is a plan view illustrating the outline of an automatic analyzer.
Fig. 2 is a schematic diagram illustrating a sample dispensing mechanism.
Fig. 3 is a schematic diagram illustrating each operation performed by using the sample dispensing mechanism.
Fig. 4 is a schematic diagram illustrating a tip removal portion.
Fig. 5 is a flowchart illustrating each step of a tip removing operation performed in the tip removal portion.
Fig. 6 is a schematic diagram illustrating each step of the tip removing operation performed in the tip removal portion.
Fig. 7 is a perspective view illustrating a tip.
Fig. 8 is a plan view illustrating the tip.
Fig. 9 is a perspective view illustrating a state where a liquid is discharged from an inside of a dispensing nozzle to an inside of the tip.
Fig. 10 is a perspective view illustrating the dispensing nozzle.
Fig. 11 is a cross-sectional view illustrating the dispensing nozzle.
Fig. 12 is a schematic diagram illustrating a state where the liquid is discharged from the dispensing nozzle into the tip.

### Description of Embodiments

Embodiments of the invention will now be described with reference to the drawings. In the following, the members having the same function are indicated by the same reference numerals in all the drawings, and the overlapped description thereof is omitted. In addition, in the following embodiments, the description of the same or similar portions is not repeated in principle except when particularly necessary.

In addition, an X direction, a Y direction, and a Z direction described in this application intersect and are orthogonal to each other. The Z direction includes a Z1 direction and a Z2 direction that is a direction opposite to the Z1 direction. In this application, for description, the Z1 direction is a down direction and the Z2 direction is an up direction. In addition, the expression of the term "plan view", the term "as seen in plan view", or the like used in this application means that a plane configured of the X direction and the Y direction is a "plane", and the "plane" is seen in the Z1 direction.

### First Embodiment

### <The configuration of an automatic analyzer>

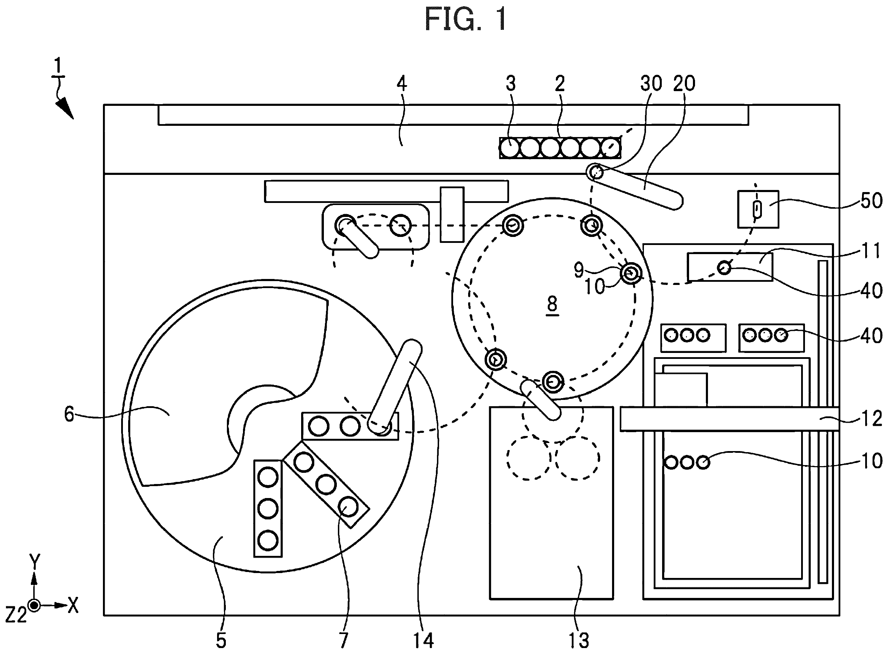

Hereinbelow, an automatic analyzer 1 according to a first embodiment will be described with reference to Fig. 1.

As illustrated in Fig. 1, the automatic analyzer 1 includes a rack transportation line 4, a reagent refrigeration unit 5, a reaction disk (incubator disk) 8, a tip temporary installation portion 11, a consumption article transportation unit 12, a detection portion unit 13, a reagent dispensing mechanism 14, a sample dispensing mechanism 20, a dispensing nozzle 30, a tip 40, a tip removal portion 50, a control portion 60, and the like.

The rack transportation line 4 is used for transporting a sample rack 2. The sample rack 2 accommodates a plurality of sample vessels 3. In each of the plurality of sample vessels 3, a biological sample, such as blood or urine, is accommodated as a sample. In a state where the plurality of sample vessels 3 are accommodated in the sample rack 2, the sample rack 2 is transported on the rack transportation line 4.

The reagent refrigeration unit 5 is used for accommodating or refrigerating a plurality of reagent vessels 7. In the plurality of reagent vessels 7, various reagents to be used for analyzing the sample are accommodated. In addition, at least part of the upper surface of the reagent refrigeration unit 5 is covered by a reagent disk cover 6.

The reaction disk 8 is used as a place for reacting the sample with the reagent. The reaction disk 8 has a reaction vessel installation portion 9 for disposing a plurality of reaction vessels 10, and a temperature regulation mechanism (not illustrated) for regulating the temperature of the reaction vessel 10 to a predetermined temperature.

To the tip temporary installation portion 11, a plurality of tips 40 are installed. The tip 40 is mounted to the dispensing nozzle 30 in the tip temporary installation portion 11. It should be noted that the tip 40 is a disposable tip of a disposable type. In addition, the tip 40 that has been used is removed from the dispensing nozzle 30 in the tip removal portion 50.

The consumption article transportation unit 12 transports a constantly installed consumption article, such as the tip 40 or the reaction vessel 10, to a predetermined place.

The sample dispensing mechanism 20 has the dispensing nozzle 30, and as driving means for the dispensing nozzle 30, a rotation driving mechanism and an up-down driving mechanism, not illustrated. On the driving line of the dispensing nozzle 30, the sample rack 2, the reaction vessel installation portion 9, the tip temporary installation portion 11, and the tip removal portion 50 are arranged. In Fig. 1, such the driving line is indicated by a dashed line. It should be noted that likewise, the driving lines of other dispensing mechanisms are also indicated by dashed lines.

The reagent dispensing mechanism 14 also has a reagent dispensing nozzle, and as the driving means for the reagent dispensing nozzle, a reagent rotation driving mechanism and an up-down driving mechanism, not illustrated. These driving mechanisms dispense the reagent from the reagent vessel 7 to the reaction vessel 10 accommodated in the reaction disk 8.

The detection portion unit 13 inspects the sample that is subjected to a predetermined process such as the mixing with the reagent. The detection portion unit 13 includes a photomultiplier tube, a light source lamp, a spectrometer, a photodiode, and the like, and also has a function of regulating the temperatures of these. For example, the detection portion unit 13 detects a light generated in a reaction process of a labeling antibody coupled to an antigen of the sample and a luminescent substrate by using the photomultiplier tube, and can thus measure the amount of the antigen contained in the sample.

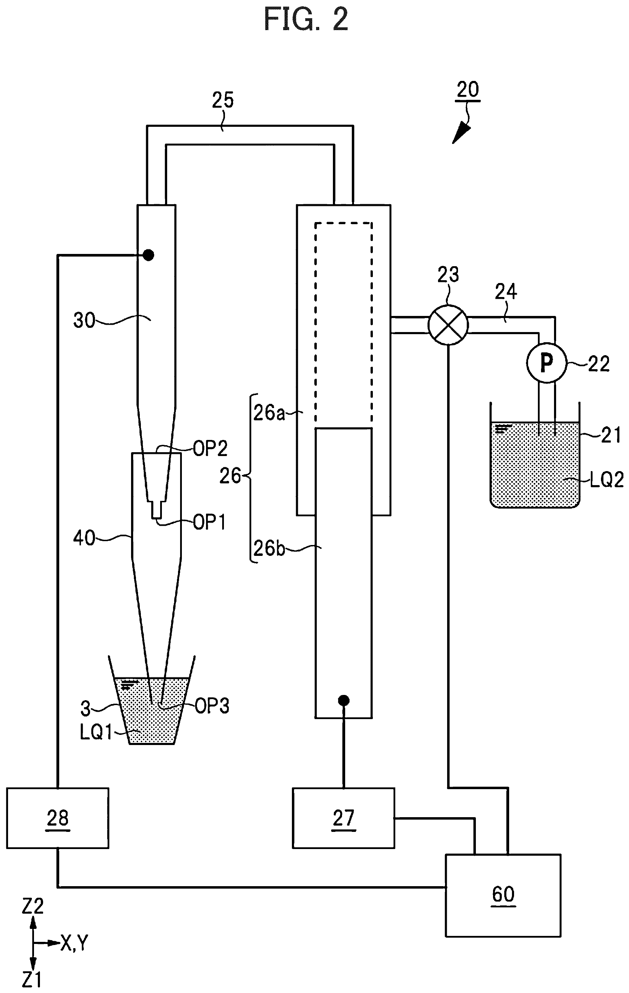

Fig. 2 illustrates the schematic configuration of the sample dispensing mechanism 20 according to the first embodiment.

The inside of a liquid supplying tank 21 is filled with a liquid LQ2. The liquid LQ2 is, for example, water as a polar molecule or an aqueous solution in which the water is a solvent. To a flow passage 24 connecting the liquid supplying tank 21 and a syringe 26, a liquid supplying pump 22 and an electromagnetic valve 23 are provided. The liquid supplying pump 22 sends the liquid LQ2 in the liquid supplying tank 21 to the syringe 26. The electromagnetic valve 23 controls the opening/closing operation of the flow passage 24.

The syringe 26 includes a cylinder 26a and a plunger 26b. To the plunger 26b, a syringe driving means 27 is electrically connected. The syringe driving means 27 drives the plunger 26b up and down with respect to the cylinder 26a, thereby operating the liquid LQ2 filled in the inside of the syringe 26. With this, the sample dispensing mechanism 20 performs the aspiration operation and the discharging operation for the liquid.

The dispensing nozzle 30 is connected to the syringe 26 through a flow passage 25. The inside of the flow passage 25 is filled with the liquid LQ2. To the dispensing nozzle 30, a dispensing nozzle driving means 28 like, for example, a motor is electrically connected. The dispensing nozzle driving means 28 can move the dispensing nozzle 30 in a horizontal direction and a vertical direction, and can move the dispensing nozzle 30 to a predetermined position.

The control portion 60 is an arithmetic device including a semiconductor device such as a CPU. The control portion 60 is electrically connected to the electromagnetic valve 23, the syringe driving means 27, and the dispensing nozzle driving means 28, and controls the operations of these. That is, the aspiration operation and the discharging operation by the dispensing nozzle 30 are controlled by the control portion 60. It should be noted that the control portion 60 also controls each operation performed by each mechanism included in the automatic analyzer 1, such as the rack transportation line 4, the reagent refrigeration unit 5, the reaction disk 8, the consumption article transportation unit 12, the detection portion unit 13, the reagent dispensing mechanism 14, and the sample dispensing mechanism 20.

Fig. 2 illustrates a state where the tip 40 is mounted to the dispensing nozzle 30. The dispensing nozzle 30 has an opening portion OP1 for aspirating and discharging the liquid. The tip 40 has an opening portion OP2 and an opening portion OP3. The opening portion OP2 is provided for mounting to the dispensing nozzle 30 so as to surround the opening portion OP1. The opening portion OP3 is provided to aspirate and discharge the liquid.

In a state where the tip 40 is mounted to the dispensing nozzle 30, the respective opening directions of the opening portion OP1 and the opening portion OP3 are the same direction, and are each the Z1 direction. The opening direction of the opening portion OP2 is a direction opposite to the opening direction of each of the opening portion OP1 and the opening portion OP3, and is the Z2 direction.

After the tip 40 is mounted to the dispensing nozzle 30 in the tip temporary installation portion 11, the dispensing nozzle 30 aspirates a liquid LQ1 from the sample vessel 3 on the sample rack 2 in the sample dispensing mechanism 20. It should be noted that the liquid LQ1 is a sample liquid, and is, for example, a biological sample, such as blood or urine. Next, the dispensing nozzle 30 dispenses the liquid LQ1 into the reaction vessel 10 accommodated in the reaction disk 8. Thereafter, the tip removal portion 50 removes the tip 40 from the dispensing nozzle 30.

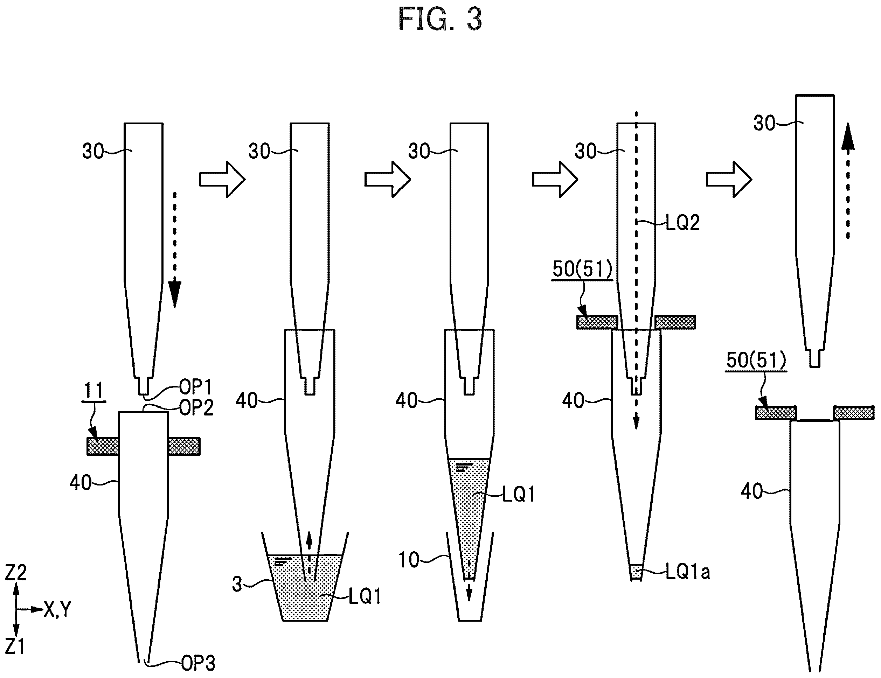

Fig. 3 illustrates each basic operation performed by using the sample dispensing mechanism 20.

When the liquid LQ1 in the sample vessel 3 is aspirated, air (partitioning air) is aspirated to the inside of the dispensing nozzle 30 prior to the aspiration operation, in order that the liquid LQ2 filled in the inside of the dispensing nozzle 30 and the liquid LQ1 do not mix with each other. Next, in the tip temporary installation portion 11, the tip 40 is mounted to the dispensing nozzle 30.

Next, until the opening portion OP3 of the tip 40 reaches into the liquid LQ1, the dispensing nozzle 30 is lowered by the dispensing nozzle driving means 28, and the aspiration operation by the dispensing nozzle 30 is performed by the syringe driving means 27. With this, the liquid LQ1 is aspirated from the outside of the tip 40 (sample vessel 3) to the inside of the tip 40 through the opening portion OP3.

After the aspiration operation is completed, the dispensing nozzle 30 is moved to a predetermined sample discharging position. Next, the discharging operation by the dispensing nozzle 30 is performed by the syringe driving means 27. With this, the liquid LQ1 is discharged from the inside of the tip 40 to the outside of the tip 40 (reaction vessel 10) through the opening portion OP3.

In this case, near the opening portion OP3, part of the liquid LQ1 can remain as a remaining liquid LQ1a in the inside of the tip 40.

After the liquid LQ1 is discharged from the inside of the tip 40, the dispensing nozzle 30 is moved to the tip removal portion 50, and the tip 40 is removed from the dispensing nozzle 30. In this case, the liquid supplying pump 22 or the syringe 26 supplies the liquid LQ2 in the liquid supplying tank 21 to the inside of the dispensing nozzle 30. The liquid LQ2 is discharged from the inside of the dispensing nozzle 30 to the inside of the tip 40 through the opening portion OP1, and the liquid LQ2 and the remaining liquid LQ1a are discharged from the inside of the tip 40 to the outside of the tip 40 through the opening portion OP3.

By discharging the liquid LQ2 to the inside of the tip 40 at the time of removing the tip 40, the remaining liquid LQ1a is removed from the inside of the tip 40 and the pressure reduction in the inside of the tip 40 is released.

By lifting the dispensing nozzle 30 while the liquid LQ2 is discharged from the inside of the dispensing nozzle 30 to the inside of the tip 40, the upper surface (opening portion OP2) of the tip 40 is caused to collide with a removing plate 51 of the tip removal portion 50. With this, the tip 40 is removed from the dispensing nozzle 30.

When the liquid LQ2 is discharged to the inside of the tip 40, there is possibility that the liquid LQ2 collides with the remaining liquid LQ1a, the remaining liquid LQ1a scatters, and the remaining liquid LQ1a directly comes into contact with the dispensing nozzle 30. Then, the remaining liquid LQ1a drops from the dispensing nozzle 30 to the inside of the tip 40 in the next aspiration operation, so that the remaining liquid LQ1a possibly mixes into the next sample liquid, and there is a problem that the accuracy of the analysis using the automatic analyzer 1 is lowered.

In the first embodiment, to solve such the problem, the configuration of the tip removal portion 50 is contrived.

### <The feature of the tip removal portion 50>

In the automatic analyzer 1 according to the first embodiment, the liquid LQ2 discharged from the dispensing nozzle 30 is attracted to the inner wall side of the tip 40 by an electrostatic force. By preventing the liquid LQ2 from directly colliding with the remaining liquid LQ1a, the remaining liquid LQ1a can be suppressed from scattering. Therefore, since the remaining liquid LQ1a can be suppressed from directly coming into contact with the dispensing nozzle 30, the accuracy of the analysis using the automatic analyzer 1 can be suppressed from being lowered.

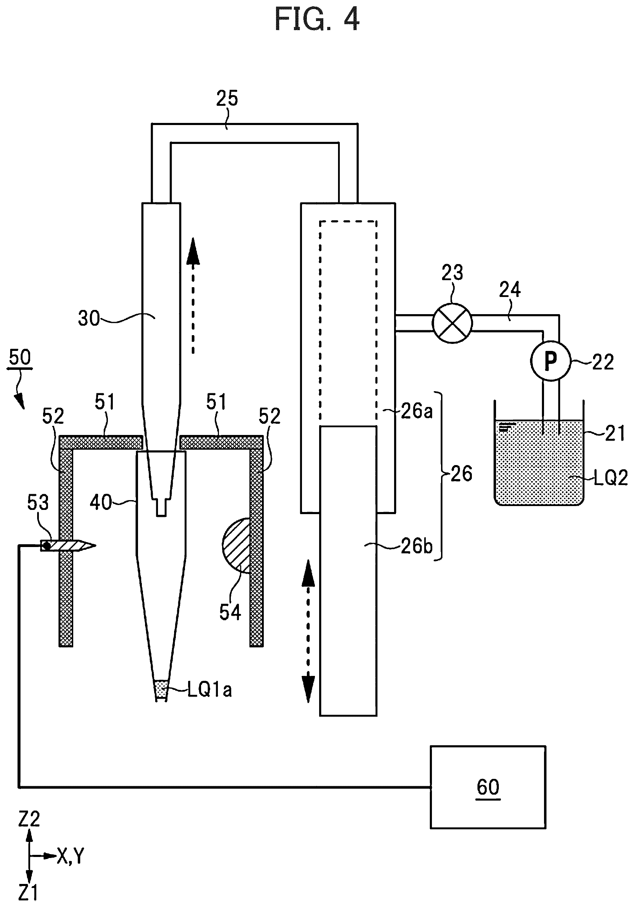

Fig. 4 illustrates the schematic configuration of the tip removal portion 50. The tip removal portion 50 has the removing plate 51 and a side wall 52. The removing plate 51 is provided to the upper portion of the side wall 52. It should be noted that although not illustrated, the removing plate 51 is provided with a first hole having a larger aperture diameter than the opening portion OP2 of the tip 40 and a second hole having a smaller aperture diameter than the opening portion OP2. The first hole and the second hole communicate with each other. When the tip 40 is moved into the tip removal portion 50, the first hole is used, and when the tip 40 is removed from the dispensing nozzle 30, the second hole is used.

To the side wall 52, a charging body 54 that can be charged to a positive potential or a negative potential is provided. To the portion of the side wall 52 opposite to the portion to which the charging body 54 is provided, a charging device 53 for electric discharge is provided. The control portion 60 is electrically connected to the charging device 53, and controls a voltage supplied to the charging device 53, in order to charge the charging body 54 to the positive potential or the negative potential.

The tip 40 is positioned adjacent to the charging body 54. When the charging body 54 is charged to the positive potential or the negative potential, polarization occurs in the inside of the tip 40. With this, the surface of the inner wall of the tip 40 is charged with electric charge of the same pole as the charging body 54. The liquid LQ2 contains water as the polar molecule, and has a characteristic in which the liquid LQ2 is attracted to the positive electric charge or the negative electric charge. For that, the inside of the resin of the tip 40 is polarized, and the surface of the inner wall of the tip 40 is locally charged to one of the positive electric charge and the negative electric charge, so that the discharging direction of the liquid LQ2 can be attracted to a charging position of the inner wall of the tip 40.

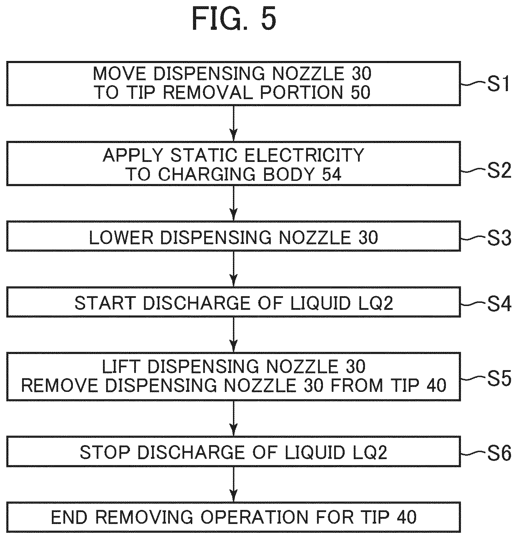

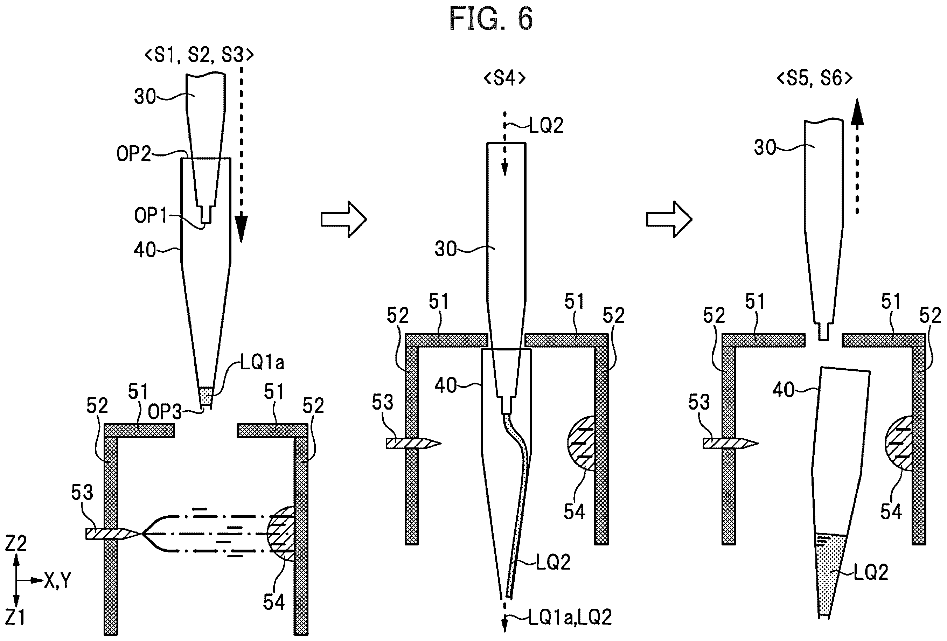

Fig. 5 is a flowchart illustrating steps S1 to S6 of the tip removing operation performed in the tip removal portion 50. Fig. 6 schematically illustrates the states of steps S1 to S6 of Fig. 5.

First, in step S1, the dispensing nozzle 30 to which the tip 40 is mounted is moved to above the removing plate 51 of the tip removal portion 50.

Next, in step S2, the voltage is supplied to the charging device 53 to cause the electric discharge from the charging device 53, so that the charging body 54 is charged to the positive potential or the negative potential.

Next, in step S3, the dispensing nozzle 30 is lowered to move the tip 40 to below the removing plate 51. With this, the tip 40 is positioned adjacent to the charging body 54 in a space surrounded by the removing plate 51 and the side wall 52. The polarization locally occurs in the inside of the tip 40 positioned near the charging body 54, so that the surface of the inner wall of the tip 40 is charged with the electric charge of the same pole as the charging body 54.

Next, in step S4, the liquid LQ2 is discharged from the inside of the dispensing nozzle 30 to the inside of the tip 40 through the opening portion OP1, and the liquid LQ2 and the remaining liquid LQ1a are discharged from the inside of the tip 40 to the outside of the tip 40 through the opening portion OP3. The liquid LQ2 discharged to the inside of the tip 40 is attracted by the electrostatic force by the electric charge on the surface of the inner wall of the tip 40, and is discharged along the inner wall of the tip 40. That is, the liquid LQ2 is discharged so as to impinge upon the inner wall of the tip 40 by the time when reaching the opening portion OP3 from the opening portion OP1. Since the liquid LQ2 does not directly collide with the remaining liquid LQ1a, the remaining liquid LQ1a can be suppressed from scattering.

Next, in step S5, the dispensing nozzle 30 is lifted, and the upper surface (opening portion OP2) of the tip 40 is caused to collide with the removing plate 51, thereby removing the tip 40 from the dispensing nozzle 30. It should be noted that the dispensing nozzle 30 is lifted while the liquid LQ2 is discharged from the inside of the dispensing nozzle 30 to the inside of the tip 40.

Next, in step S6, after the tip 40 is removed, the discharge of the liquid LQ2 from the dispensing nozzle 30 is stopped. With this, the removing operation of the tip 40 is ended.

### Second Embodiment

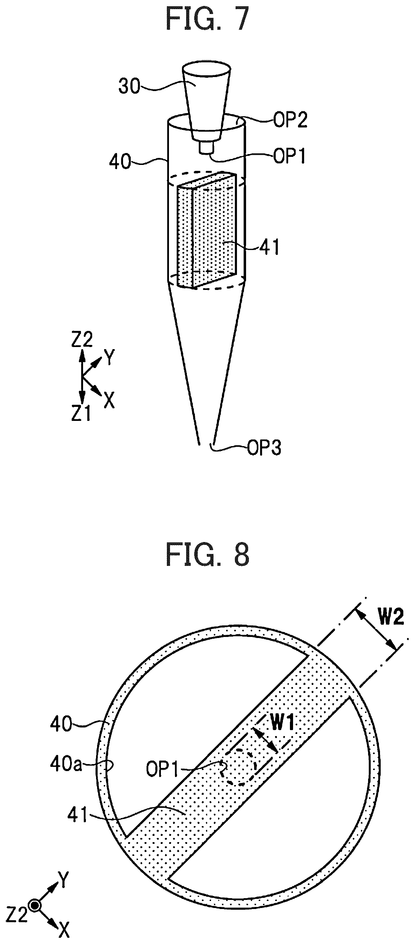

Hereinbelow, the automatic analyzer 1 according to a second embodiment will be described with reference to Figs. 7 **to 9****.** It should be noted that in the following description, the point different from the first embodiment will be mainly described, and the description of the overlapped point is omitted.

The second embodiment is similar to the first embodiment in that by preventing the liquid LQ2 from directly colliding with the remaining liquid LQ1a, the remaining liquid LQ1a can be suppressed from scattering. For that, in the second embodiment, the inner configuration of the tip 40 is contrived.

As illustrated in Figs. 7 and 8, the tip 40 according to the second embodiment has a water shut-off body 41 as a structure body for inhibiting the flow of the liquid LQ2 discharged from the opening portion OP1 of the dispensing nozzle 30. The water shut-off body 41 is provided to part of an inner wall 40a of the tip 40 so as to cause a space between the water shut-off body 41 and the inner wall 40a of the tip 40.

In addition, the water shut-off body 41 is disposed at a position that is, to some extent away from the end portion of the dispensing nozzle 30 and both end portions of the tip 40. In other words, the water shut-off body 41 is positioned between the opening portion OP2 and the opening portion OP3. When the tip 40 is mounted to the dispensing nozzle 30, the water shut-off body 41 is positioned between the opening portion OP1 and the opening portion OP3.

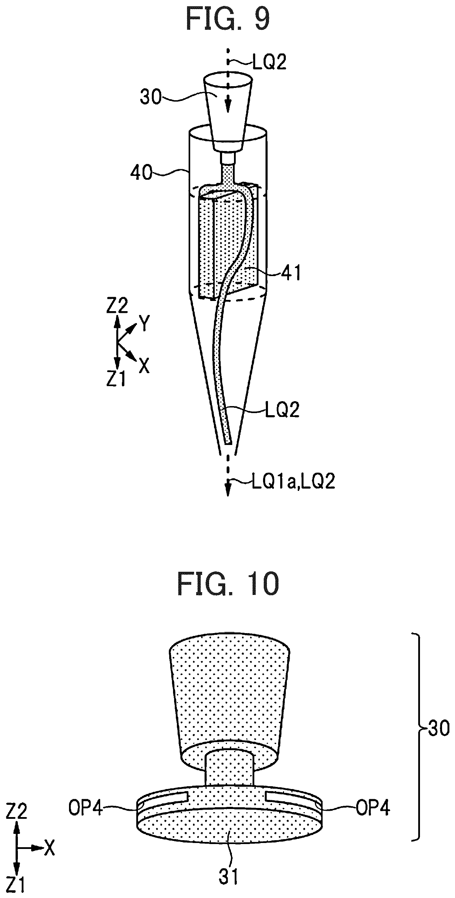

Fig. 9 illustrates a state where the liquid LQ2 is discharged from the opening portion OP1 of the dispensing nozzle 30 to the inside of the tip 40. The liquid LQ2 discharged from the dispensing nozzle 30 impinges upon the water shut-off body 41, so that the liquid LQ2 is discharged so as not to directly collide with the remaining liquid LQ1a. The liquid LQ2 that impinges upon the water shut-off body 41 mainly flows along the inner wall 40a of the tip 40 to the opening portion OP3 side. That is, the liquid LQ2 is discharged so as to impinge upon the inner wall of the tip 40 by the time when reaching the opening portion OP3 from the opening portion OP1. With this, the remaining liquid LQ1a is suppressed from scattering.

It should be noted that as illustrated in Fig. 8, in order that the liquid LQ2 reliably impinges upon the water shut-off body 41, the water shut-off body 41 is desirably provided at a position overlapped with the opening portion OP1 seen in plan view. In addition, as the water shut-off body 41 is larger, the liquid LQ2 easily impinges upon the water shut-off body 41 more reliably. For example, in a direction orthogonal to the opening direction of the opening portion OP1 (in Fig. 8, the X direction), a width W2 of the water shut-off body 41 is larger than an opening width W1 of the opening portion OP1.

### Third Embodiment

Hereinbelow, the automatic analyzer 1 according to a third embodiment will be described with reference to Figs. 10 to 12. It should be noted that in the following description, the point different from the first embodiment and the second embodiment will be mainly described, and the description of the overlapped point is omitted.

The third embodiment is similar to the first embodiment and the second embodiment in that by preventing the liquid LQ2 from directly colliding with the remaining liquid LQ1a, the remaining liquid LQ1a can be suppressed from scattering. For that, in the third embodiment, the end portion of the dispensing nozzle 30 is contrived.

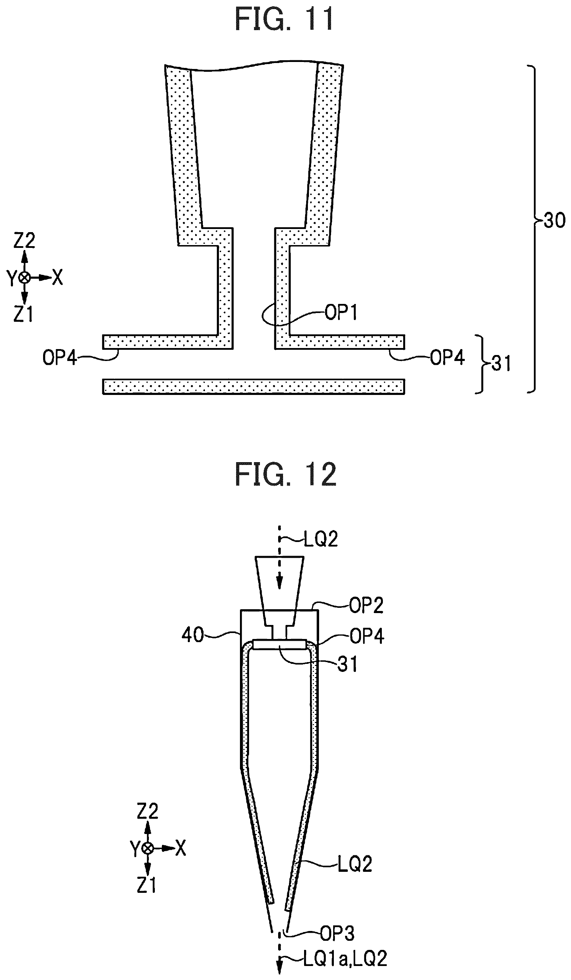

As illustrated in Figs. 10 and 11, the dispensing nozzle 30 according to the third embodiment has an end portion 31 mounted at the end of the opening portion OP1. The end portion 31 is provided with an opening portion OP4 communicating with the opening portion OP1. The opening direction of the opening portion OP4 is different from the opening direction of the opening portion OP1, and is orthogonal to the opening direction of the opening portion OP1. The opening portion OP4 is disposed toward the inner wall 40a of the tip 40, so that the liquid LQ2 mainly flows along the inner wall 40a of the tip 40 to the opening portion OP3 side.

Fig. 12 illustrates a state where the liquid LQ2 is discharged from the opening portion OP4 of the dispensing nozzle 30 to the inside of the tip 40. When the liquid LQ2 is discharged from the opening portion OP4 of the dispensing nozzle 30 to the inside of the tip 40, the liquid LQ2 is discharged through the opening portion OP1 and the opening portion OP4. When the liquid LQ2 and the remaining liquid LQ1a are discharged from the inside of the tip 40 to the outside of the tip 40 through the opening portion OP3, the liquid LQ2 is discharged so as to impinge upon the inner wall of the tip 40 by the time when the liquid LQ2 reaches the opening portion OP3 from the opening portion OP4. Therefore, the remaining liquid LQ1a is suppressed from scattering.

This invention has been specifically described above on the basis of the above embodiments, but this invention is not limited to the above embodiments, and various modifications can be made in the scope not departing from its purport.

### List of Reference Signs

1: automatic analyzer
2: sample rack
3: sample vessel
4: rack transportation line
5: reagent refrigeration unit
6: reagent disk cover
7: reagent vessel
8: reaction disk
9: reaction vessel installation portion
10: reaction vessel
11: tip temporary installation portion
**12:** consumption article transportation unit
13: detection portion unit
14: reagent dispensing mechanism
20: sample dispensing mechanism
21: liquid supplying tank
22: liquid supplying pump
23: electromagnetic valve
24: flow passage
25: flow passage
26: syringe
26a: cylinder
26b: plunger
27: syringe driving means
28: dispensing nozzle driving means
30: dispensing nozzle
31: end portion
40: tip
40a: inner wall of tip
41: water shut-off body
50: tip removal portion
51: removing plate
52: side wall
53: charging device
54: charging body
60: control portion
LQ1: liquid (sample liquid)
LQ1a: remaining liquid
LQ2: liquid
OP1: opening portion of dispensing nozzle
OP2: opening portion of tip
OP3: opening portion of tip
OP4: opening portion of end portion

## Claims

1. An automatic analyzer comprising:
a nozzle having a first opening portion for aspirating and discharging a liquid;
a tip having a second opening portion for mounting the tip to the nozzle so as to surround the first opening portion, and a third opening portion for aspirating and discharging the liquid; and
a control portion controlling an aspiration operation and a discharging operation by the nozzle,
wherein when in a state where the tip is mounted to the nozzle, after a first liquid is aspirated from an outside of the tip to an inside of the tip through the third opening portion and the first liquid is discharged from the inside of the tip to the outside of the tip through the third opening portion, a second liquid is discharged from an inside of the nozzle to the inside of the tip through the first opening portion, and the second liquid and the first liquid remaining in the inside of the tip are discharged from the inside of the tip to the outside of the tip through the third opening portion, the second liquid is discharged so as to impinge upon an inner wall of the tip by the time when the second liquid reaches the third opening portion from the first opening portion.

2. The automatic analyzer according to claim 1,
wherein the automatic analyzer further includes a tip removal portion for removing the tip from the nozzle,
wherein the tip removal portion has a side wall and a removing plate provided to an upper portion of the side wall, and
wherein to the side wall, a charging body that can be charged to a positive potential or a negative potential is provided.

3. The automatic analyzer according to claim 2,
wherein to the portion of the side wall opposite to the portion to which the charging body is provided, a charging device for electric discharge is provided, and
wherein the control portion is electrically connected to the charging device, and controls a voltage supplied to the charging device in order to charge the charging body to the positive potential or the negative potential.

4. The automatic analyzer according to claim 2,
wherein when in a state where the tip is mounted to the nozzle, the second liquid is discharged from the inside of the nozzle to the inside of the tip through the first opening portion, and the second liquid and the first liquid remaining in the inside of the tip are discharged from the inside of the tip to the outside of the tip through the third opening portion, the tip is positioned adjacent to the charging body in a space surrounded by the removing plate and the side wall.

5. The automatic analyzer according to claim 2,
wherein in a state where the tip is mounted to the nozzle, respective opening directions of the first opening portion and the third opening portion are the same direction, and are opposite to the opening direction of the second opening portion.

6. The automatic analyzer according to claim 1,
wherein the tip has a water shut-off body positioned between the second opening portion and the third opening portion, and
wherein the water shut-off body is provided to part of the inner wall of the tip so as to cause a space between the water shut-off body and the inner wall of the tip.

7. The automatic analyzer according to claim 6,
wherein in a state where the tip is mounted to the nozzle, the respective opening directions of the first opening portion and the third opening portion are the same direction, and are opposite to the opening direction of the second opening portion, and
wherein when the tip is mounted to the nozzle, the water shut-off body is positioned between the first opening portion and the third opening portion.

8. The automatic analyzer according to claim 7,
wherein in a direction orthogonal to the opening direction of the first opening portion, a width of the water shut-off body is larger than an opening width of the first opening portion.

9. The automatic analyzer according to claim 1,
wherein the nozzle has an end portion mounted at an end of the first opening portion,
wherein the end portion is provided with a fourth opening portion communicating with the first opening portion, and
wherein an opening direction of the fourth opening portion is different from the opening direction of the first opening portion.

10. The automatic analyzer according to claim 9,
wherein the opening direction of the fourth opening portion is orthogonal to the opening direction of the first opening portion.

11. The automatic analyzer according to claim 9,
wherein when the second liquid is discharged from the inside of the nozzle to the inside of the tip, the second liquid is discharged through the first opening portion and the fourth opening portion, and
wherein when the second liquid and the first liquid remaining in the inside of the tip are discharged from the inside of the tip to the outside of the tip through the third opening portion, the second liquid is discharged so as to impinge upon the inner wall of the tip by the time when the second liquid reaches the third opening portion from the fourth opening portion.

12. The automatic analyzer according to claim 9,
wherein in a state where the tip is mounted to the nozzle, the respective opening directions of the first opening portion and the third opening portion are the same direction, and are opposite to the opening direction of the second opening portion, and
wherein the opening direction of the fourth opening portion is different from the opening direction of each of the first opening portion, the second opening portion, and the third opening portion.
